Europäisches Patentamt

European Patent Office

Office européen des brevets

(11) Veröffentlichungsnummer: **0 260 688 B1**

## (12) EUROPÄISCHE PATENTSCHRIFT

(45) Veröffentlichungstag der Patentschrift: **25.03.92**

(21) Anmeldenummer: **87113594.3**

(22) Anmeldetag: **17.09.87**

(51) Int. Cl.⁵: **C08F 299/04**, C08G 63/54

(54) Verfahren zur Herstellung von Formstoffen aus ungesättigten Polyesterharzen.

(30) Priorität: **19.09.86 DE 3631839**

(43) Veröffentlichungstag der Anmeldung:
**23.03.88 Patentblatt 88/12**

(45) Bekanntmachung des Hinweises auf die
Patenterteilung:
**25.03.92 Patentblatt 92/13**

(84) Benannte Vertragsstaaten:
**DE ES FR GB IT NL**

(56) Entgegenhaltungen:
**EP-A- 0 101 585**
**EP-A- 0 118 786**
**FR-A- 2 310 368**

**CHEMICAL ABSTRACTS, vol. 83, 1975, page
73, abstract no. 115904d, Columbus, Ohio,
US**

(73) Patentinhaber: **BASF Aktiengesellschaft
Carl-Bosch-Strasse 38
W-6700 Ludwigshafen(DE)**

(72) Erfinder: **Holoch, Jan, Dr.
Helaweg 11
W-6900 Heidelberg(DE)**
Erfinder: **Demmler, Kurt, Dr.
Irisstrasse 8
W-6700 Ludwigshafen(DE)**

EP 0 260 688 B1

## Beschreibung

Die Erfindung betrifft ein Verfahren zur Herstellung von thermisch stabilen, hochwärmeformbeständigen Formstoffen aus ungesättigten Polyesterharzen, die Cyclopenten- oder Cyclohexen-Gruppen enthalten, durch Härtung bei erhöhter Temperatur.

Formstoffe aus ungesättigten Polyesterharzen, die mit Dicyclopentadien oder dessen Derivaten modifiziert sind, weisen bekanntlich eine hohe Temperaturbeständigkeit und Wärmeformbeständigkeit auf. Die Endeigenschaften werden jedoch erst nach längerem Lagern bei hohen Temperaturen (z.B. 24 Stunden bei 220°C) erreicht.

In der EP-A-118 786 wird ein Verfahren zur Herstellung von thermisch stabilen, hochwärmeformbeständigen Formstoffen aus ungesättigten Polyesterharzen, die mit Dicyclopentadien modifiziert wurden, beschrieben, bei dem die Härtung zunächst bei Temperaturen unterhalb 100°C in Gegenwart von bei diesen Temperaturen zerfallenden Radikalbildnern und dann bei Temperaturen oberhalb von 200°C in Gegenwart von oberhalb 140°C zerfallenden Radikalbildnern durchgeführt wird. Die Nachhärtung soll vorzugsweise zwischen 210 und 260°C erfolgen bei einer bevorzugten Härtungsdauer von 30 Minuten bis 1 Tag. Bei diesen erhöhten Temperaturen delaminieren jedoch dickere glasfaserverstärkte Formstoffe aus ungesättigten Polyesterharzen, die Cyclopenten- oder Cyclohexen-Gruppen enthalten, so daß es bisher nicht möglich war, dickere Laminate vollständig auszuhärten und dadurch die außerordentlichen Eigenschaften von Formstoffen aus Reinharz auf faserverstärkte Materialien zu übertragen.

Der Erfindung lag also die Aufgabe zugrunde, die hohe Temperaturbeständigkeit durch eine kurze thermische Nachbehandlung bei tieferen Temperaturen zur erreichen und auf reproduzierbare Weise thermisch stabile, hochwärmeformbeständige Formstoffe herzustellen, ohne daß bei faserverstärkten Formstoffen eine Delaminierung auftritt.

Überraschenderweise wurde nun gefunden, daß die Endeigenschaften eines Formstoffs aus einem Cyclopenten- und Cyclohexengruppen enthaltenden Polyesterharz durch eine Zweistufenhärtung wesentlich schneller und bei Temperaturen deutlich unter 200°C erreicht werden können. Dazu wird zunächst der Formstoff bei Temperaturen unterhalb 100°C, bevorzugt unterhalb von 60°C und insbesondere bei Raumtemperatur, in Gegenwart von bei diesen Temperaturen zerfallenden Radikalbildnern gehärtet. Die zweite Härtungsstufe erfolgt bei Temperaturen zwischen 120 und 200°C, bevorzugt zwischen 130 und 190°C und insbesondere zwischen 150 und 180°C, in Gegenwart von Radikalbildnern, deren Halbwertszeit bei 120°C mehr als 30 Minuten beträgt. Schon nach einer Stunde ist der Formstoff vollständig ausgehärtet. Damit ein Formstoff, dem kein bei höherer Temperatur zerfallender Radikalbildner zugesetzt wurde, dieselbe Temperatur- und Wärmeformbeständigkeit erreicht, muß er 24 Stunden bei 220°C nachgehärtet werden. Das erfindungsgemäße Verfahren hat den Vorteil, daß bei den angewandten verhältnismäßig niedrigen Nachhärtungstemperaturen faserverstärkte Formstoffe nicht delaminieren. Außerdem werden bei der Nachhärtung Zeit und Energie gegenüber den bisherigen Methoden eingespart.

Ausgangsmaterial für das erfindungsgemäße Verfahren sind ungesättigte Polyester aus ethylenisch ungesättigten Dicarbonsäuren und Diolen. Als ethylenisch ungesättigte Dicarbonsäuren oder deren Anhydride kommen insbesondere Maleinsäure, Fumarsäure, Itaconsäure und Tetrahydrophthalsäure, sowie deren Anhydride in Frage, wobei Maleinsäureanhydrid bevorzugt ist. Daneben können andere Carbonsäuren oder Anhydride, wie Adipinsäure, o-Phthalsäureanhydrid, Trimellithsäure oder Pyromellithsäure mitverwendet werden.

Geeignete Diole sind z.B. Propylenglykol-1,2, Ethylenglykol, Diethylenglykol, Butandiol-1,3, Butandiol-1,4, Neopentylglykol sowie hydriertes Bisphenol A. Daneben können Polyole, wie Trimethylolpropan, Glyzerin und Pentaerythrit mitverwendet werden.

Zum Einbau der Cyclopenten- bzw. Cyclohexen-Gruppierungen in die ungesättigten Polyester werden diese mit Dicyclopentadien bzw. dessen Derivaten oder Substitutionsprodukten modifiziert, vorzugsweise mit Dicyclopentadien oder Endomethylentetrahydrophthalsäure. Diese Umsetzungen sind bekannt. Wenn man von Diestern mit hoher Säurezahl oder freier Maleinsäure ausgeht und bei Temperaturen zwischen 120 und 140°C arbeitet, erhält man im wesentlichen eine Addition des Dicyclopentadiens an endständige Carboxyl- bzw. Hydroxylgruppen, wobei sich endständige Dicyclopentenylester- bzw. Dicyclopentenylethergruppen bilden. Setzt man Polyester mit niedriger Säurezahl ein und arbeitet bei höheren Temperaturen, vorzugsweise oberhalb von 170°C, so spaltet sich das Dicyclopentadien in zwei Moleküle Cyclopentadien, welches sich an Ethylendicarbonsäureester-Strukturen des Polyesters addiert und Endomethylentetrahydrophthalsäureester-Strukturen bildet. Diese Strukturen lassen sich auch durch den Einsatz von Endomethylentetrahydrophthalsäure oder deren Anhydrid erzeugen.

Bei einer bevorzugten Ausführungsform werden die modifizierten ungesättigten Polyester einem zusätzlichen Endgruppenverschluß mit N-Hydroxyalkyltetrahydrophthalimid bzw. N-Hydroxyalkylendomethylentetrahydrophthalimid, insbesonders Hydroxyethylenendomethylentetrahydrophthalimid, unterworfen. Solche Umsetzungen sind z.B. in der deutschen Patentanmeldung DE-A-32 30 924 beschrieben.

Die modifizierten ungesättigten Polyester werden in einer bevorzugten Ausführungsform in Vinylmonomeren gelöst, wobei üblicherweise 30 bis 100 Gew.-Teile Monomer auf 100 Gew.-Teile Polyester verwendet werden. Geeignete Vinylmonomere sind z.B. Styrol, Methylstyrol, Chlorstyrol oder Methylmethacrylat. Darüber hinaus können bevorzugt zusätzlich noch Monomere verwendet werden, die erst bei höheren Temperaturen polymerisieren, z.B. Diallylphthalat, trans-Endomethylentetrahydrophthalsäurediethylester oder Endomethylentetrahydrophthalsäuredihydroxyethylester.

Die ungesättigten Polyester können die üblichen Zusatzstoffe, wie Füllstoffe, Verstärkungsfasern, Inhibitoren, Stabilisatoren, Farbstoffe, Pigmente, Eindickmittel und Beschleuniger bzw. Promotoren enthalten.

Erfindungsgemäß werden die modifizierten ungesättigten Polyesterharze in 2 Stufen gehärtet. In der ersten Stufe arbeitet man bei Temperaturen unterhalb von 100°C in Gegenwart von üblichen Kalthärtungssystemen, z.B. Ketonperoxid/Kobaltbeschleuniger oder Acylperoxid/Aminbeschleuniger. Bei dieser Härtung erfolgt die Copolymerisation der Vinylmonomeren mit den Ethylendicarbonester-Doppelbindungen des ungesättigten Polyesters. In manchen Fällen, insbesondere beim Härten von dünnen Schichten, kann es zweckmäßig sein, den vorgehärteten Formstoff einige Zeit auf Temperaturen um 100°C, vorzugsweise zwischen 80 und 120°C, zu erwärmen, um eine vollständige Polymerisation der Monomeren zu bewirken.

In der 2. Stufe erfolgt die erfindungsgemäße Nachhärtung bei Temperaturen zwischen 120 und 200°C, vorzugsweise zwischen 150 und 180°C, durch Zerfall des stabileren Radikalbildners, der in der ersten Stufe schon zugegen war, jedoch noch nicht zersetzt wurde. Als Radikalbildner kommen z.B. tert.-Butylperbenzoat, Dicumylperoxid, Ditertiärbutylperoxid, C-C-labile Verbindungen und Perketale in Frage. Die Halbwertszeit dieser Radikalbildner bei 120°C ist größer als 30 Minuten.

Die Nachhärtung soll schnell ablaufen, d.h. nach einer Stunde sollte die gesamte Peroxidmenge zersetzt sein. Nachhärtzeiten von weniger als 2 Stunden, insbesondere von 10 bis 100 min sind bevorzugt. Die folgende Tabelle gibt die Halbwertszeiten (in Stunden) einiger Peroxide wieder:

| | 120°C | 130°C | 140°C | 150°C | 160°C |
|---|---|---|---|---|---|
| 1,1,4,4,7,7-Hexamethyl-cyclo-4,7-diperoxynonan | 67 | 21 | 7,0 | 2,5 | 1,0 |
| Ditertiärbutylperoxid | 22 | 6,0 | 1,4 | 0,6 | 0,2 |
| Dicumylperoxid | 6,6 | 1,7 | 0,5 | 0,1 | - |
| tert.-Butylperbenzoat | 2,2 | 0,6 | 0,2 | - | - |
| 3,3,5-Trimethylcyclohexanonperketal | 0,8 | - | - | - | - |

Aus dieser Tabelle geht hervor, daß die minimale Nachhärtungstemperatur von der Art des hochzerfallenden Peroxids abhängt. Während z.B. tert.-Butylperbenzoat nach einstündiger Nachhärtung bei 140°C weitgehend zersetzt ist, ist dafür bei Ditertiärbutylperoxid eine Temperatur von 160°C notwendig.

Durch die erfindungsgemäße Zweistufenhärtung wird die Vernetzungsdichte und damit auch die Temperaturbeständigkeit der Formstoffe erhöht. Wegen ihrer hohen thermischen Beständigkeit und Wärmeformbeständigkeit sind die Formstoffe überall dort einsetzbar, wo diese Eigenschaften, verbunden mit einer guten Chemikalienbeständigkeit und ausgezeichneten dielektrischen Werten verlangt werden, also z.B. auf dem Elektrosektor, im Motorraum des Automobils.

Die in den folgenden Beispielen genannten Teile und Prozente beziehen sich auf das Gewicht. Die Messungen der Glasübergangstemperatur (Tg) und des Schubmoduls (G') erfolgten an 6 x 1 x 0,1 cm großen Probekörpern mit Hilfe der Torsions-Schwingungs-Analyse nach DIN 53 445. Tg ist ein Maß für die Wärmeformbeständigkeit, G' für die Vernetzungsdichte und die Steifheit des Formstoffs.

Beispiel 1

485 Teile Maleinsäureanhydrid, 266 Teile Ethylenglykol, 431 Teile N-Hydroxyethyltetrahydrophthalimid und 0,18 Teile Toluhydrochinon werden unter Rühren und Darüberleiten von Stickstoff innerhalb von 3 1/2 Stunden bei 190°C bis zu einer Säurezahl von 44 verestert. Bei dieser Temperatur werden innerhalb einer Stunde 109 Teile Dicyclopentadien hinzugefügt.

Anschließend wird bis zu einer Säurezahl von 23 weiterverestert. 1000 Teile des ungesättigten Polyesters werden bei Temperaturen unterhalb von 120°C in 492 Teilen Styrol gelöst. Proben dieses ungesättigten Polyesterharzes wurden mit 2 % Methylethylketonperoxid und 0,2 % Kobaltbeschleunigerlösung (Co-Gehalt: 1 %), teilweise unter Zusatz von hochzerfallenden Radikalbildnern, 24 Stunden bei Raumtemperatur gehärtet. Die Proben wurden unterschiedlich lang bei erhöhten Temperaturen nachgehärtet.

Ergebnisse:

| Versuch | Zusätzl. Peroxid | Nachhärtungs-temp. (°C) | Dauer (h) | Tg (°C) | G' (250°C) (N/mm$^2$) |
|---|---|---|---|---|---|
| 1 | - | 220 | 1 | 130 | 16 |
| 2 | - | 220 | 24 | 180 | 38 |
| 3 | 1 % Dicumylperoxid | 180 | 1 | 180 | 32 |
| 4 | 2 % Dicumylperoxid | 180 | 1 | 190 | 30 |
| 5 | 1 % DTBP | 180 | 1 | 185 | 34 |
| 6 | 2 % DTBP | 180 | 1 | 190 | 45 |
| DTBP: Ditertiärbutylperoxid | | | | | |

Beispiel 2

176 Teile Maleinsäureanhydrid, 95 Teile Dicyclopentadien und 13 Teile Wasser werden unter Rühren und Darüberleiten von Stickstoff langsam auf 140°C erhitzt und eine Stunde bei dieser Temperatur gehalten. 97 Teile Ethylenglykol werden hinzugefügt, es wird auf 190°C aufgeheizt und bis zu einer Säurezahl von 56 verestert. 40 Teile Dicyclopentadien werden innerhalb einer Stunde hinzugetropft, und die veresterung wird bis zu einer Säurezahl von 39 fortgesetzt. 300 Teile des so erhaltenen ungesättigten Polyesters werden nach Zugabe von 0,045 Teilen Toluhydrochinon bei Temperaturen unter 120°C in 147 Teilen Styrol gelöst. Härtungsversuche wurden analog Beispiel 1 durchgeführt.

Ergebnisse:

| Versuch | Zusätzl. Peroxid | Nachhärtungs-temp. (°C) | Dauer (h) | Tg (°C) | G' (250°C) (N/mm$^2$) |
|---|---|---|---|---|---|
| 1 | - | 220 | 1 | 140 | 20 |
| 2 | - | 220 | 24 | 180 | 48 |
| 3 | 1 % Dicumylperoxid | 180 | 1 | 175 | 43 |
| 4 | 2 % Dicumylperoxid | 180 | 1 | 180 | 46 |

Beispiel 3

196 Teile Maleinsäureanhydrid und 390 Teile N-Hydroxyethyltetrahydro-phthalimid werden unter Rühren und Darüberleiten von Stickstoff auf 140°C erhitzt und bei dieser Temperatur 2 Stunden gehalten. 196 Teile Maleinsäureanhydrid und 198 Teile Ethylenglykol werden hinzugefügt, es wird auf 200°C aufgeheizt und bis zu einer Säurezahl von 30 verestert. 800 Teile des ungesättigten Polyesters werden nach Zusatz von 0,12 Teilen Hydrochinon bei Temperaturen unterhalb von 120°C in 394 Teilen Styrol gelöst. Härtungsversuche wurden analog Beispiel 1 durchgeführt.

Ergebnisse:

| Versuch | Zusätzl. Peroxid | Nachhärtungs-temp. (°C) | Dauer (h) | Tg (°C) | G' (200°C) (N/mm$^2$) |
|---------|------------------|-------------------------|-----------|---------|------------------------|
| 1 | - | 220 | 1 | 183 | 50 |
| 2 | - | 220 | 5 | 190 | 130 |
| 3 | - | 220 | 10 | 195 | 150 |
| 4 | - | 220 | 24 | 206 | 270 |
| 5 | 2 % Dicumylperoxid | 180 | 1 | 205 | 310 |

Beispiel 4

Beispiel 3 wurde wiederholt. Die Harzproben wurden jedoch statt mit Ketonperoxid/Kobaltbeschleuniger mit 1,5 % Benzoylperoxidpulver (50%ig in Phthalat) und 0,025 % Dimethylanilin bei Raumtemperatur gehärtet.

Ergebnisse:

| Versuch | Zusätzl. Peroxid | Nachhärtungs-temp. (°C) | Dauer (h) | Tg (°C) | G' (200°C) (N/mm$^2$) |
|---------|------------------|-------------------------|-----------|---------|------------------------|
| 1 | - | 180 | 1 | 181 | 50 |
| 2 | 2 % Dicumylperoxid | 180 | 1 | 205 | 240 |

Beispiel 5a (Vergleich)

Das Harz aus Beispiel 3 wird mit 2 % Methylethylketonperoxid und 0,2 % Kobaltbeschleunigerlösung (Co-Gehalt: 1 %) versetzt und entgast. Nach dem Handlaminierverfahren wird ein 2 cm dickes Laminat mit 20 Lagen Textilglasmatte Vetrotex M 123 - E 50 - 450 (Firma Gevetex Textilglas-GmbH) gefertigt. Das Laminat wird zunächst bei Raumtemperatur gehärtet und anschließend im Umlufttrockenschrank 24 Stunden bei 220°C nachgehärtet. Nach dem Abkühlen wird es in der Mitte zersägt. Mehrere kreisrunde Delaminierungen sind zu erkennen.

Beispiel 5b

Beispiel 5a wird unter Zusatz von 2 % Dicumylperoxid wiederholt. Das Laminat wird zunächst bei Raumtemperatur und anschließend eine Stunde bei 180°C gehärtet. Es treten keine Delaminierungen auf.

**Patentansprüche**

1. Verfahren zur Herstellung von thermisch stabilen, hochwärmeformbeständigen Formstoffen aus ungesättigten Polyesterharzen, die Cyclopenten- oder Cyclohexen-Gruppierungen enthalten, durch Härtung bei erhöhten Temperaturen, dadurch gekennzeichnet, daß die Härtung in zwei Stufen durchgeführt wird:
   a) zunächst bei Temperaturen unterhalb 100°C in Gegenwart von bei diesen Temperaturen zerfallenden Radikalbildnern,
   b) dann bei Temperaturen zwischen 120°C und 200°C in Gegenwart von Radikalbildnern, deren Halbwertszeit bei 120°C mehr als 30 Minuten beträgt.

2. Verfahren nach Anspruch 1, dadurch gekennzeichnet, daß die ungesättigten Polyester mit Dicyclopentadien, Endomethylentetrahydrophthalsäure, Hydroxyethyltetrahydrophthalimid oder Hydroxyethylendomethylentetrahydrophthalimid modifiziert wurden.

3. Verfahren nach Anspruch 1, dadurch gekennzeichnet, daß die ungesättigten Polyester in Vinylmonomeren gelöst und dann gehärtet werden.

## Claims

1. A process for preparing a thermally stable molding material of high heat resistance from an unsaturated polyester resin which contains cyclopentene or cyclohexene groups by curing at elevated temperatures, which comprises carrying out the curing in two stages:
   a) initially at a temperature below 100°C in the presence of a free-radical former which decomposes at that temperature,
   b) then within the range from 120°C to 200°C in the presence of a free-radical former whose half-life at 120°C is more than 30 minutes.

2. A process as claimed in claim 1, wherein the unsaturated polyester has been modified with dicyclopentadiene, endomethylenetetrahydrophthalic acid, hydroxyethyltetrahydrophthalimide or hydroxyethylendomethylenetetrahydrophthalimide.

3. A process as claimed in claim 1, wherein the unsaturated polyester is dissolved in a vinyl monomer and then cured.

## Revendications

1. Procédé de fabrication de semi-produits moulés thermostables, résistants à la chaleur à partir de résines polyesters insaturées qui contiennent des groupements cyclopentène ou cyclohexène, par durcissement à température élevée, caractérisé en ce que le durcissement est effectué en deux étapes:
   a) tout d'abord à des températures inférieures à 100°C, en présence d'initiateurs radicalaires qui se décomposent à ces températures,
   b) puis à des températures comprises entre 120°C et 200°C en présence d'initiateurs radicalaires dont le temps de demi-réaction a 120°C s'élève a plus de 30

2. Procédé selon la revendication 1, caractérisé en ce que les polyesters insaturés ont été modifiés par du dicyclopentadiène, de l'acide endométhylènetétrahydrophtalique, de l'hydroxyéthyltétrahydro-phtalimide ou de l'hydroxyéthylendométhylènetétrahydrophtalimide.

3. Procédé selon la revendication 1, caractérisé en ce que les polyesters insaturés sont dissous dans des monomères vinyliques, puis durcis.